# EUROPEAN PATENT APPLICATION

(11) **EP 4 628 516 A1**
(43) Date of publication of application: **08.10.2025**
(21) Application number: 23898348.0
(22) Date of filing: 30.11.2023
(51) Int. Cl.: C08F 265/06, C08K 3/013, C08K 7/16, C09D 5/28, C09D 7/61, C09D 7/65, C08J 7/04

(54) **CURED PRODUCT AND DECORATIVE FILM COMPRISING SAME**

(30) Priority: 01.12.2022 KR 20220165687
(71) Applicant: LX Hausys, Ltd., Seoul 04637 (KR)
(72) Inventor: KIM, Da Sol, Seoul 07796 (KR); LEE, Bobin, Seoul 07796 (KR); KIM, Saetbyeol, Seoul 07796 (KR)
(74) Representative: Goddar, Heinz J.
(86) International application number: PCT/KR2023/019592
(87) International publication number: WO 2024/117824

(57) **Abstract**

A cured product according to an exemplary embodiment of the present invention is a cured product of an acrylic-based resin composition, and has peaks at 9.00 minutes to 11.00 minutes when extracted at 133 m/z (mass/charge) and 203 m/z (mass/charge), respectively, in a graph obtained by Pyro-GCMS (Pyro-Gas Chromatography/Mass Spectrometry) analysis of the cured product.

## Description

### [Technical Field]

This application claims priority to and the benefit of Korean Patent Application No. 12-2022-0165687 filed in the Korean Intellectual Property Office on December 1, 2022, the entire contents of which are incorporated herein by reference.

The present invention relates to a cured product, and a decorative film comprising the same.

### [Background Art]

Decorative films with a matte property (or low-gloss property) are widely used in the manufacture of films for building interior materials and furniture. More specifically, the matte property of the decorative film may be achieved by forming irregularities on the surface to induce diffuse reflection. For example, it has been common in the related art to employ a technique for manufacturing a decorative film with a matte property by applying a coating agent containing a matting agent (e.g., silica) onto a base material and then curing the coating agent.

However, when surface irregularities are formed to achieve a matte property, there is a problem in that contaminants that penetrate between peaks and valleys of the irregularities are not easily removed, leading to deterioration in stain resistance of the decorative film. Furthermore, since a typical matting agent is porous and has a low apparent specific gravity, it tends to remain in the surface layer of the coating, which leads to deterioration in the stain resistance, such as an increase in surface adsorption of foreign substances (e.g., fine dust, moisture, grease, and the like). Note that, in order to improve the stain resistance, it is advantageous to improve the curing density. For example, the use of a multifunctional oligomer in the coating agent may be considered. However, when the amount of multifunctional oligomer is increased, the gloss of the cured product layer increases, which makes it unsuitable for decorative films intended to exhibit a matte property. That is, since the matte property and the stain resistance are trade-off properties, there is a need for research to provide a decorative film that can satisfy both properties at the same time.

### [Detailed Description of the Invention]

### [Technical Problem]

The present invention has been made in an effort to provide a cured product and a decorative film comprising the same. More specifically, the present invention has been made in an effort to provide a cured product with excellent matte property and stain resistance, and a decorative film comprising the same.

### [Technical Solution]

An exemplary embodiment of the present invention provides a cured product, wherein the cured product is a cured product of an acrylic-based resin composition, and has peaks at 9.00 minutes to 11.00 minutes when extracted at 133 m/z (mass/charge) and 203 m/z (mass/charge), respectively, in a graph obtained by Pyro-GCMS (Pyro-Gas Chromatography/Mass Spectrometry) analysis of the cured product.

In addition, another exemplary embodiment of the present invention provides a decorative film comprising a base material layer; and the above-described cured product provided on the base material layer.

In addition, still another exemplary embodiment of the present invention provides a method for manufacturing a decorative film, comprising:
preparing a base material layer;
applying an acrylic-based resin composition on the base material layer;
first light irradiation of irradiating the applied composition with light (L1) having a predetermined wavelength under an inert gas condition to form wrinkles on a surface of the applied composition; and
second light irradiation of irradiating the applied composition with light (L2) having a longer wavelength than the light (L1) under an air condition to form a cured product layer of the composition,
wherein the cured product layer has peaks at 9.00 to 11.00 minutes when extracted at 133 m/z (mass/charge) and 203 m/z (mass/charge), respectively, in a graph obtained by Pyro-GCMS (Pyro-Gas Chromatography/Mass spectrometry) analysis of the cured product layer.

### [Advantageous Effects]

A cured product according to an exemplary embodiment of the present invention and a decorative film comprising the same exhibit a matte property and excellent stain resistance. In particular, the cured product according to an exemplary embodiment of the present invention and the decorative film comprising the same can improve the stain resistance against contaminants that leave a dark color even on a matte surface, such as mustard.

### [Brief Description of Drawings]

FIG. 1 is a schematic diagram showing a decorative film according to an exemplary embodiment of the present invention.
FIG. 2 is a graph showing results of Pyro-GCMS (Pyro-Gas Chromatography/Mass Spectrometry) analysis of a cured product according to Example 1 of the present invention.
FIG. 3 is a graph showing results of Pyro-GCMS analysis of a cured product according to Example 2 of the present invention.
FIG. 4 is a graph showing results of Pyro-GCMS analysis of a cured product according to Example 3 of the present invention.
FIG. 5 is a graph showing results of Pyro-GCMS analysis of a cured product according to Example 4 of the present invention.
FIG. 6 is a graph showing results of Pyro-GCMS analysis of a cured product according to Example 5 of the present invention.
FIG. 7 is a graph showing results of Pyro-GCMS analysis of a cured product according to Example 6 of the present invention.
FIG. 8 is a graph showing results of Pyro-GCMS analysis of a cured product according to Comparative Example 1 of the present invention.
FIG. 9 is a graph showing results of Pyro-GCMS analysis of a cured product according to Comparative Example 2 of the present invention.
FIG. 10 is a graph showing results of Pyro-GCMS analysis of a cured product according to Comparative Example 3 of the present invention.

### <Explanation of Reference Numerals and Symbols>

10: base material layer
20: cured product

### [Best Mode]

Hereinafter, the present invention will be described in more detail.

Throughout the present invention, when a member is referred to as being "on" another member, the member may be in direct contact with another member or an intervening member may also be present between two members.

In the present invention, when a part is referred to as "comprising" a certain component, it means that the part can further comprise another component, not excluding another component, unless explicitly described to the contrary.

When purchasing furniture, consumers consider surface properties, particularly stain resistance, as one of the most important characteristics, and it is also one of the elements that are easily encountered. In particular, when the surface is matte-finished, contaminants often become trapped in the fine surface irregularities formed to reduce gloss, which adversely affects stain resistance. Even in the case of contaminants that leave a dark color on the surface, such as soy sauce, tomato sauce, kimchi liquid, and mustard sauce, they significantly alter the appearance, so a technique for preventing discoloration is essential. However, due to the nature of matte coating, it is difficult to achieve such prevention.

Accordingly, the present invention has been made in an effort to provide a cured product and a decorative film comprising the same capable of improving the stain resistance against contaminants that leave a dark color even on a matte surface, such as mustard.

A cured product according to an exemplary embodiment of the present invention is a cured product of an acrylic-based resin composition, and has peaks at 9.00 minutes to 11.00 minutes when extracted at 133 m/z (mass/charge) and 203 m/z (mass/charge), respectively, in a graph obtained by Pyro-GCMS (Pyro-Gas Chromatography/Mass Spectrometry) analysis of the cured product.

The Pyro-GCMS refers to a system in which a pyrolysis device (pyrolyzer), a gas chromatograph (GC), and a mass spectrometer (MS) are connected in series, and which separates pyrolysis products generated by pyrolysis using the GC and then detects them using the MS. **In** other words, the Pyro-GCMS is a system that pyrolyzes a sample using the pyrolysis device, separates the resulting pyrolysis products into individual components using the GC, and then analyzes them using the MS to identify each separated substance through its mass spectrum and determine its quantity. Since each peak appearing in the graph obtained by Pyro-GCMS analysis has a mass spectrum inherent therein, the pyrolysis product can be identified by interpreting the corresponding mass spectrum, and its content can be determined from the area of each peak.

**In** particular, the inventors of the present invention have found that, when the cured product has peaks at 9.00 to 11.00 minutes when extracted at 133 m/z and 203 m/z, respectively, in a graph obtained by Pyro-GCMS analysis, the surface of the cured product exhibits excellent stain resistance. In particular, in the graph obtained by Pyro-GCMS analysis of the cured product, if no peaks are observed at 9.00 to 11.00 minutes when extracted at 133 m/z and 203 m/z, respectively, the desirable effect of the present invention of improving the stain resistance against contaminants, which leave a dark color even on a matte surface, such as mustard, cannot be achieved.

In an exemplary embodiment of the present invention, in the graph obtained by Pyro-GCMS analysis of the cured product, the cured product may have peaks at 9.00 to 11.00 minutes, at 9.50 to 10.90 minutes, or at 10.00 to 10.80 minutes, when extracted at 133 m/z and 203 m/z, respectively.

In an exemplary embodiment of the present invention, the cured product may have a surface gloss value of 10 or less, 6 or less, 1 to 5, or 1.5 to 4 under a 60° gloss condition. When the surface gloss value of the cured product under a 60° gloss condition falls within the specific range, the matte property required for the decorative film can be secured. In the present invention, the gloss value under a 60° gloss condition may be measured using a gloss meter in accordance with ASTM D2457, and is a numerical value representing the degree of surface gloss. A lower gloss value may indicate a more matte surface.

In an exemplary embodiment of the present invention, a surface of the cured product may have a wrinkled surface, and a surface roughness (Rz) of the cured product may be 3 µm to 10 µm, 3.5 µm to 9 µm, or 4 µm to 8 µm. When the surface roughness (Rz) of the cured product falls within the specific range, the matte property required for a decorative film can be secured, and the surface of the cured product can also exhibit a smooth tactile feel.

The surface roughness (Rz) of the cured product may be measured in accordance with ISO 4281 and may also be referred to as ten point average roughness. More specifically, the surface roughness of the cured product is a numerical value representing the degree of irregularities, and represents a deviation by taking a reference length L as a cross-sectional curve of the surface of the cured product and measuring an interval between the fifth ridge from the higher side and the fifth valley from the deeper side of the undulating structure, in a straight line that does not cross the cross-sectional curve parallel to the mean line of the portion. In this case, the reference length (L) may be on the order of several mm, for example, in the range of about 0.1 mm to 1 mm, and specifically, about 0.8 mm.

The wrinkled surface makes it possible to satisfy the surface roughness (Rz), gloss value, and the like of the cured product.

The wrinkled surface means that the cured product comprises wrinkles on at least one surface thereof, and has three-dimensional surface irregularities due to the wrinkles. For example, the surface has irregularities comprising large and small ridges, valleys, and wrinkles formed therefrom that can be visually recognized in a predetermined shape. Each of the ridges, valleys and wrinkles may have a regular or irregular shape. Such a wrinkled surface may also be referred to as a surface having a micro-folding structure.

When observing the wrinkled surface of the cured product in the normal direction of the cured product, ridges, valleys, wrinkles, and irregularities formed therefrom are observed over the entire region of the surface, for example, through a curing process described below.

The wrinkles may be observed in a form comprising a line shape having directionality (for example, a straight line and a curve). For example, wrinkles on the surface formed by repeated straight and curved shapes may provide the surface of a coating layer with undulations like a mountain range. As such, the surface irregularity structure formed by wrinkles having a line shape is clearly distinguishable from a so-called point-wise irregularity shape formed by using particles in a composition for forming a cured product layer or by employing an emulsion dispersion method.

The surface of the cured product may comprise wrinkles that can be visually recognized in a predetermined size and shape. More specifically, the wrinkles may have a width ranging from several hundred nm to several tens of µm, and a line (straight or curved) shape extending with a length ranging from several µm to several hundred µm. The width and extension length of the wrinkles can be confirmed from an image (for example, SEM) obtained by capturing the wrinkled surface.

The ends of the wrinkles extending in the straight or curved shape may be incorporated into the cured product while forming an inclination in which the height gradually decreases. **In** some cases, the end of one wrinkle having the above-described size and shape may become a starting point of another wrinkle or a connection point with another wrinkle. **In** addition, when the cross-sectional curve near a wrinkle is observed in a direction perpendicular to the extension direction of the wrinkle, the width of the wrinkle may be incorporated into the coating layer while forming an inclination in which the height gradually decreases in both directions based on a point or portion (for example, ridge) forming the height of the wrinkle. Note that, when a ridge and a valley adjacent thereto form a wrinkle or a part thereof, a region of a shape, which is visually recognized comprising the valley, may be seen as the width of the wrinkle.

**In** an exemplary embodiment of the present invention, the surface of the cured product may have a dendrite shape, which is a radially undulating structure extending from one point as a center to a periphery.

**In** an exemplary embodiment of the present invention, the cured product may be manufactured through a curing treatment of a composition having a predetermined configuration. The composition may be a photocurable solvent-free composition. That is, the composition may not contain an organic solvent, an aqueous solvent, or the like. When the solvent-free composition is used, a drying process for the solvent may be omitted, so process efficiency may be increased. **In** addition, when the solvent-free composition is used, it is possible to prevent deterioration of surface properties due to bubbles and the like generated while a solvent is volatilized during the solvent drying process.

**In** an exemplary embodiment of the present invention, the cured product is a cured product of an acrylic-based resin composition.

More specifically, the acrylic-based resin composition may comprise 1 to 60 parts by weight of an acrylic-based oligomer, 1 to 40 parts by weight of a silicone-based oligomer, and 30 to 100 parts by weight of a monomer, and may comprise 5 parts by weight or less of an initiator with respect to 100 parts by weight of the acrylic-based oligomer, the silicone-based oligomer, and the monomer.

The acrylic-based oligomer refers to an oligomer obtained using a monomer containing an acrylic group. The acrylic-based oligomer may comprise one or more of methyl acrylate oligomer, (meth)acrylate oligomer, methyl (meth)acrylate oligomer, ethyl acrylate oligomer, urethane (meth)acrylate oligomer, and the like.

A weight average molecular weight of the acrylic-based oligomer may be 100 g/mol to 50,000 g/mol, 500 g/mol to 30,000 g/mol, or 1,000 g/mol to 10,000 g/mol. When the weight average molecular weight of the above acrylic-based oligomer falls within the specific range, the durability of the cured product can be further enhanced.

According to an exemplary embodiment of the present invention, by comprising the silicone-based oligomer, a gloss-reducing effect can be achieved, and surface wrinkles can be controlled to improve fingerprint resistance. A weight average molecular weight of the silicone-based oligomer may be 1,000 g/mol to 50,000 g/mol, or from 5,000 g/mol to 10,000 g/mol. The silicone-based oligomer may be a urethane acrylate-based oligomer having an inserted silicone group, but is not limited thereto.

The monomer may be an acrylic-based monomer, and specifically, an acrylate-based monomer containing a hydrophilic group, but is not limited thereto. The monomer may comprise one or more of (meth)acrylate, 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 2-hydroxyethylene glycol (meth)acrylate, 2-hydroxypropylene glycol (meth)acrylate, acrylic acid, methacrylic acid, 2-(meth)acryloyloxyacetic acid, 3-(meth)acryloyloxypropyl acid, 4-(meth)acryloyloxybutyric acid, 1,6-hexanediol diacrylate, acrylic acid dimer, itaconic acid, maleic acid, caprolactone modified hydroxyacrylate (CHA), tetraethylene glycol diacrylate, tripropylene glycol diacrylate, dipropylene glycol diacrylate, triethylene glycol diacrylate, pentaerythritol triacrylate, trimethylolpropane ethoxy triacrylate, and the like.

The composition may comprise 1 to 60 parts by weight of an acrylic-based oligomer, 1 to 40 parts by weight of a silicone-based oligomer, and 30 to 100 parts by weight of a monomer, and may comprise 5 parts by weight or less, 3 parts by weight or less, or 1 part by weight or less of an initiator with respect to 100 parts by weight of the acrylic-based oligomer, the silicone-based oligomer, and the monomer. The present invention can exhibit a high curing rate even when the initiator is comprised in a small amount within the specific range, by sequentially applying short-wavelength light in a specific range under different conditions during curing of the composition.

The composition may further comprise a high-hardness filler to enhance the durability of the cured product. For example, the filler may be one that can enhance surface hardness without affecting the gloss of the cured product after curing of the composition. More specifically, as the filler, silica, alumina, glass beads, organic beads (polymer particles, and the like), or the like may be used. The filler may be comprised in an amount of 3 parts by weight or less with respect to 100 parts by weight of the composition so as not to impair the gloss and stain resistance of the cured product.

**In** an exemplary embodiment of the present invention, a thickness of the cured product may be 0.1 µm to 25 µm, 1 µm to 20 µm, or 5 µm to 18 µm. If the thickness of the cured product is less than 0.1 µm, it may be difficult for the cured product to have a wrinkled surface, and if the thickness exceeds 25 µm, an overall thickness of the decorative film may become thick, which may limit its applications.

In addition, another exemplary embodiment of the present invention provides a decorative film comprising a base material layer; and the above-described cured product provided on the base material layer.

In the decorative film according to an exemplary embodiment of the present invention, the description of the cured product is the same as described above.

The type of the base material layer is not particularly limited. For example, the base material layer may comprise glycol modified polyethylene terephthalate (PETG), polyvinyl chloride (PVC) or polyethylene terephthalate (PET). A thickness of the base material layer is also not particularly limited. For example, the thickness of the base material layer may be 30 µm or more, 50 µm or more, 100 µm or more, 150 µm or more, 200 µm or more, 250 µm or more, 300 µm or more, 350 µm or more, 400 µm or more, 450 µm or more, or 500 µm or more. Additionally, the thickness of the base material layer may be 3,000 µm or less, 2,000 µm or less, 1,000 µm or less, 900 µm or less, 800 µm or less, 700 µm or less, 600 µm or less, 500 µm or less, 400 µm or less, or 300 µm or less.

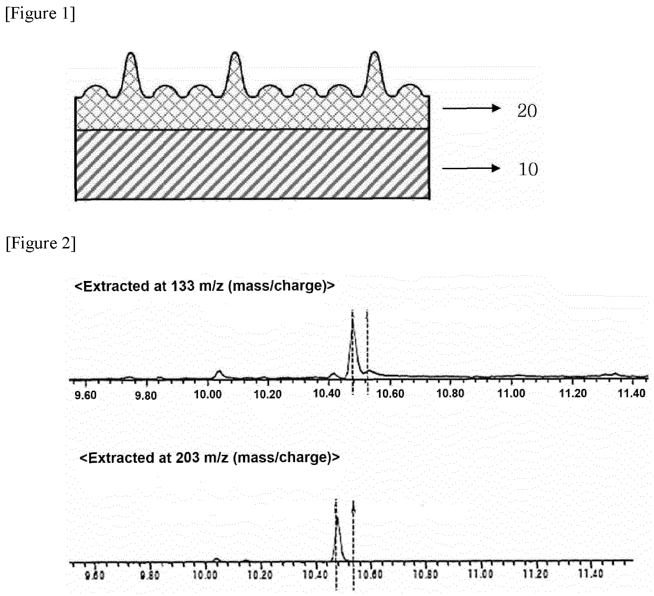

A decorative film according to an exemplary embodiment of the present invention is schematically illustrated in FIG. 1. As shown in FIG. 1, a decorative film according to an exemplary embodiment of the present invention comprises a base material layer 10, and a cured product 20 provided on the base material layer 10. In this case, the cured product 20 has peaks at 9.00 minutes to 11.00 minutes when extracted at 133 m/z and 203 m/z, respectively, in a graph obtained by Pyro-GCMS analysis of the cured product 20.

In addition, a method for manufacturing a decorative film according to an embodiment of the present invention comprises the steps of: preparing a base material layer; applying an acrylic-based resin composition on the base material layer; first light irradiation of irradiating the applied composition with light (L1) having a predetermined wavelength under an inert gas condition to form wrinkles on a surface of the applied composition; and second light irradiation of irradiating the applied composition with light (L2) having a longer wavelength than the light (L1) under an air condition to form a cured product layer of the composition, wherein the cured product layer has peaks at 9.00 to 11.00 minutes when extracted at 133 m/z and 203 m/z, respectively, in a graph obtained by Pyro-GCMS analysis of the cured product layer.

**In** the method for manufacturing a decorative film according to an exemplary embodiment of the present invention, the descriptions of the base material layer and the cured product are the same as described above.

The method of applying the composition onto the base material layer is not particularly limited. For example, the composition may be applied onto the base material layer using a known method such as a Mayer bar, a D-bar, a rubber roll, a G/V roll, an air knife, or a slot die.

The device used to irradiate light at each step is not particularly limited. For example, when irradiating light having a wavelength of 300 nm or less in the first light irradiation step and irradiating light having a wavelength of 400 nm or less in the second light irradiation step, a known mercury or metal halide lamp or the like may be used.

The first light irradiation step is a step for irradiating light to the composition applied on the base material layer, and causing excimer generated by the irradiated light to shrink a surface of the applied composition (or the composition cured by the light irradiation) to form wrinkles. The wrinkled surface induces diffuse reflection of light incident on the surface, thereby imparting a matte property.

The wrinkled surface may have the surface roughness and gloss characteristics as described above. Accordingly, a matting agent may not be used in the present invention.

**In** the first light irradiation step, light having a wavelength of 300 nm or less and having high energy, for example, light having a wavelength of 200 nm or less, may be irradiated. Specifically, light having a wavelength of 130 nm or more, 140 nm or more, 150 nm or more, 160 nm or more, or 170 nm or more may be irradiated in the first light irradiation step. The upper limit of the wavelength of the light irradiated in the first light irradiation step may be, for example, 200 nm or less, 190 nm or less, or 180 nm or less.

The first light irradiation step may be performed in an inert atmosphere. A gas used to create the inert atmosphere may be, for example, He, Ne, Ar, and/or N₂.

The inert atmosphere in which the first light irradiation step is performed may be an atmosphere in which a concentration of oxygen (O₂) is approximately 4,000 ppm or less. Specifically, the upper limit of the concentration of oxygen in the inert atmosphere may be 3,000 ppm or less, 2,500 ppm or less, 2,000 ppm or less, 1,500 ppm or less, or 1,000 ppm or less, and more specifically, 900 ppm or less, 800 ppm or less, 700 ppm or less, 600 ppm or less, 500 ppm or less, 400 ppm or less, or 300 ppm or less. Additionally, the lower limit thereof may be, for example, 50 ppm or more, 100 ppm or more, 200 ppm or more, 300 ppm or more, 400 ppm or more, 500 ppm or more, 600 ppm or more, 700 ppm or more, 800 ppm or more, 900 ppm or more, or 1,000 ppm or more.

The inert atmosphere may be formed such that the concentration of oxygen in nitrogen gas (N₂) falls within the specific range.

When the first light irradiation is performed under the inert atmosphere condition as described above, it is advantageous for securing the wrinkles and surface characteristics described above. For example, if the first light irradiation is performed in an inert atmosphere where the concentration of oxygen exceeds the specific range, the formation of wrinkles as described above becomes difficult, and the surface characteristics described above cannot be provided.

When performing the first light irradiation step, a distance between the composition and a light source, that is, a distance from the surface of the composition applied on the base material layer to the light source may be 5 mm or more. Specifically, the lower limit of the distance may be 10 mm or more, 15 mm or more, 20 mm or more, 25 mm or more, 30 mm or more, 35 mm or more, 40 mm or more, 45 mm or more, or 50 mm or more, and the upper limit thereof may be 90 mm or less, 85 mm or less, 80 mm or less, 75 mm or less, 70 mm or less, 65 mm or less, 60 mm or less, 55 mm or less, or 50 mm or less. In the first light irradiation step, when the distance between the composition and the light source is adjusted to the specific range, an appropriate amount of light can reach the composition with an appropriate intensity, which, as a result, is advantageous for forming a surface with wrinkles of the aforementioned shape and size can be formed and securing the above-described surface characteristics (e.g., surface roughness and gloss value).

An irradiation amount of light irradiated in the first light irradiation step may be 1 mJ/cm² or 5 mJ/cm² or more. Specifically, the lower limit of the irradiation amount of light in the first light irradiation step may be 10 mJ/cm² or more, 15 mJ/cm² or more, 20 mJ/cm² or more, 25 mJ/cm² or more, or 30 mJ/cm² or more, and the upper limit thereof may be 100 mJ/cm² or less, 90 mJ/cm² or less, 80 mJ/cm² or less, 70 mJ/cm² or less, 60 mJ/cm² or less, 50 mJ/cm² or less, 40 mJ/cm² or less, 30 mJ/cm² or less, or 25 mJ/cm² or less. In the first light irradiation step, when the irradiation amount of light is adjusted to the specific range, it is advantageous for forming a surface with wrinkles described above and for securing the above-described surface characteristics (e.g., surface roughness and gloss value).

The second light irradiation step is a step of applying light energy having a different wavelength from the light in the first light irradiation step to the composition coated on the base material layer and having wrinkles formed on the surface through the first light irradiation step, thereby curing the composition and forming a cured product layer.

In the second light irradiation step, light having a wavelength in a range of 200 nm to 400 nm may be irradiated. Specifically, the second light irradiation step may be a step of irradiating light having a wavelength of 210 nm or more, 220 nm or more, 230 nm or more, 240 nm or more, 250 nm or more, 260 nm or more, 270 nm or more, 280 nm or more, 290 nm or more, or 300 nm or more. The upper limit of the wavelength of light irradiated in the second light irradiation step may be 350 nm or less, 340 nm or less, 330 nm or less, 320 nm or less, 310 nm or less, or 300 nm or less. The composition having wrinkles formed on its surface while being cured only to a certain level by the first light irradiation step may be cured in a thickness direction by undergoing the second light irradiation step in which relatively long-wavelength light is irradiated.

The second light irradiation step may be a step of irradiating light having a longer wavelength than that in the first light irradiation step, within the above-described wavelength range.

The second light irradiation step is performed in an air atmosphere. The air atmosphere can increase the curing rate of the composition and provide a cleaning effect on the surface of the coating layer as oxygen molecules (O₂) are converted into ozone (O₃) during the irradiation.

When performing the second light irradiation step, the distance between the composition and the light source, that is, the distance from the surface of the composition applied on the base material layer to the light source may be 50 mm or less, 40 mm or less, 30 mm or less, or 20 mm or less. Specifically, the upper limit of the distance may be 19 mm or less, 18 mm or less, 17 mm or less, 16 mm or less, 15 mm or less, 14 mm or less, 13 mm or less, 12 mm or less, 11 mm or less, or 10 mm or less, and the lower limit may be 0.5 mm or more, 1 mm or more, 2 mm or more, 3 mm or more, 4 mm or more, or 5 mm or more. When performing the second light irradiation step, the distance between the composition and the light source may be smaller than that in the first light irradiation step. In the second light irradiation step, when the distance between the composition and the light source is adjusted within the specific range, it is advantageous for increasing the curing degree of the entire cured product layer.

The irradiation amount of light irradiated in the second light irradiation step may be greater than the irradiation amount of light irradiated in the first light irradiation step. For example, the irradiation amount of light irradiated in the second light irradiation step may be 150 mJ/cm² or more, specifically 160 mJ/cm² or more, 170 mJ/cm² or more, 180 mJ/cm² or more, 190 mJ/cm² or more, 200 mJ/cm² or more, 210 mJ/cm² or more, 220 mJ/cm² or more, 230 mJ/cm² or more, 240 mJ/cm² or more, 250 mJ/cm² or more, or 300 mJ/cm² or more. Additionally, the upper limit may be 500 mJ/cm² or less, or 400 mJ/cm² or less, specifically 350 mJ/cm² or less, 340 mJ/cm² or less, 320 mJ/cm² or less, 310 mJ/cm² or less, or 300 mJ/cm² or less. When the irradiation amount of light is adjusted with the specific range during the second light irradiation, it is advantageous for increasing the curing degree of the entire coating layer.

As described above, when the first light irradiation step and the second light irradiation step are performed, the surface of the coating layer can have a relatively dense curing density.

### Mode for Invention

Below, Examples will be described in detail to specifically describe the present invention. However, the Examples according to the present invention may be modified in other forms, and the scope of the present invention is not construed as being limited to the following Examples. The Examples of the present invention are provided to more completely explain the present invention to one skilled in the art.

### <Examples>

### <Examples 1 to 6 and Comparative Examples 1 to 3>

A composition was prepared by mixing the components shown in Tables 1 and 2 below.

A polyethylene terephthalate (PETG) film (20 cm wide X 30 cm long) comprising glycol was prepared as a base material layer, and the prepared composition was applied to the surface of the prepared film to a thickness of 3 µm to 6 µm using a bar coating method. Thereafter, the film to which the composition was applied was first irradiated with light having a wavelength of 300 nm or less at an amount of light of 1 mJ/cm² to 100 mJ/cm² in an inert atmosphere, and then irradiated with light having a wavelength in the range of 200 nm to 400 nm at an amount of light of 150 mJ/cm² to 500 mJ/cm² in an air atmosphere, thereby curing the applied film to prepare a decorative film.

**[Table 1]**

| Components | Content (parts by weight) | | | | | |
|---|---|---|---|---|---|---|
| | Example 1 | Example 2 | Example 3 | Example 4 | Example 5 | Example 6 |
| Monomer 1 | 20 | 20 | 20 | 20 | 20 | 20 |
| Monomer 2 | 25 | - | 25 | 25 | 25 | 25 |
| Monomer 3 | - | 25 | - | - | - | - |
| Oligomer 1 | 10 | 10 | - | 10 | 10 | 10 |
| Oligomer 2 | 40 | 40 | 50 | 40 | 40 | 40 |
| Oligomer 3 | 5 | 5 | 5 | 5 | 5 | 5 |
| Additive 1 | 1.2 | 1.2 | 1.2 | 1.2 | 1.2 | 1.2 |
| Additive 2 | 0.4 | 0.4 | 0.4 | - | 0.4 | - |
| Additive 3 | 1 | 1 | 1 | 1 | - | - |

**[Table 2]**

| Components | Content (parts by weight) | | |
|---|---|---|---|
| | Comparative Example 1 | Comparative Example 2 | Comparative Example 3 |
| Monomer 1 | 20 | 20 | 20 |
| Monomer 2 | 25 | - | 25 |
| Monomer 3 | - | 25 | - |
| Oligomer 1 | 15 | 10 | 10 |
| Oligomer 2 | 40 | 40 | 40 |
| Oligomer 3 | - | - | - |
| Additive 1 | 1.2 | 1.2 | 1.2 |
| Additive 2 | 0.4 | 0.4 | - |
| Additive 3 | 1 | 1 | - |

| | | | |
|---|---|---|---|
| Monomer 1 Cyclic monofunctional monomer (IBOA, Isobornyl acrylate) Monomer 2: Chain-type bifunctional monomer (HDDA, 1,6-Hexanediol diacrylate) Monomer 3: Cyclic bifunctional monomer (TCDDA, Tricyclodecane dimethanol diacrylate) Oligomer 1: Chain-type hexafunctional acrylic-based oligomer (Mw 5,000 g/mol or less) Oligomer 2 Chain-type nonafunctional acrylic-based oligomer (Mw 10,000 g/mol or less) Oligomer 3 Silicone-based oligomer (Mw 10,000 g/mol or less) Additive 1 First light stabilizer Additive 2 Second light stabilizer Additive 3 Leveling agent | | | |

### <Experimental Example 1>

The evaluation of the surface properties of the decorative films of the Examples and Comparative Examples and the results of Pyro-GCMS analysis are shown in Table 3 below.

**[Table 3]**

| | Gloss value | Roughness (Rz, µm) | Stain resistance | Peak position (minutes) | |
|---|---|---|---|---|---|
| | | | | Extracted at 133 m/z | Extracted at 203 m/z |
| Example 1 | 5.9 | 4.3 | 5 | 10.48 and 10.53 | 10.48 |
| Example 2 | 6.5 | 3.6 | 5 | 10.48 and 10.53 | 10.47 |
| Example 3 | 6.4 | 3.8 | 5 | 10.49 and 10.53 | 10.47 |
| Example 4 | 6.2 | 3.9 | 5 | 10.48 and 10.54 | 10.48 |
| Example 5 | 5.8 | 4.1 | 5 | 10.48 and 10.53 | 10.48 |
| Example 6 | 5.9 | 4.2 | 5 | 10.48 and 10.53 | 10.49 |
| Comparative Example 1 | 7.5 | 3.2 | 3 | 10.51 | X |
| Comparative Example 2 | 5.5 | 4.8 | 3 | 10.52 | X |
| Comparative Example 3 | 6.3 | 9.2 | 3 | 10.54 | X |

The method for evaluating the characteristics of Table 3 is as follows.

### <Gloss value>

The gloss was measured under a 60° gloss condition using a gloss meter in accordance with ASTM D2457.

### <Roughness (Rz, µm)>

The roughness was measured as ten point average roughness in accordance with ISO 4281. The deviation was represented by taking a reference length L (0.8 mm) as a cross-sectional curve of the surface of the first coating layer or second coating layer and measuring an interval between the fifth ridge from the higher side and the fifth valley from the deeper side of the undulating structure, in a straight line that does not cross the cross-sectional curve parallel to the mean line of the portion.

### <Stain resistance>

The stain resistance was evaluated in accordance with DIN 68861:2011, part 1. After exposure to mustard as a contaminant, the degree of staining of the surface was visually inspected and graded from Grade 1 (severely stained) to Grade 5 (no visible change).

### <Presence or absence of peak>

In the graph obtained by Pyro-GCMS analysis, the positions of peaks appearing when extracted at 133 m/z and 203 m/z are indicated, and X is marked when no peak appears.

### Pyro-GCMS analysis method

- Equipment specifications: Frontier Lab PY-3030D/Agilent 7890B/5977B
- Pyrolysis temperature: 600°C, 10min
- UA-5 column, 30m X 250 µm X 0.25 µm
- 40°C for 2min, 20 °C/min to 310°C for 14min
- Scan mode, EIC 133, 203m/z
- Data processing: The detection positions were confirmed to be the same based on EIC data.

FIG. 2 is a graph showing results of Pyro-GCMS analysis of a cured product according to Example 1 of the present invention.

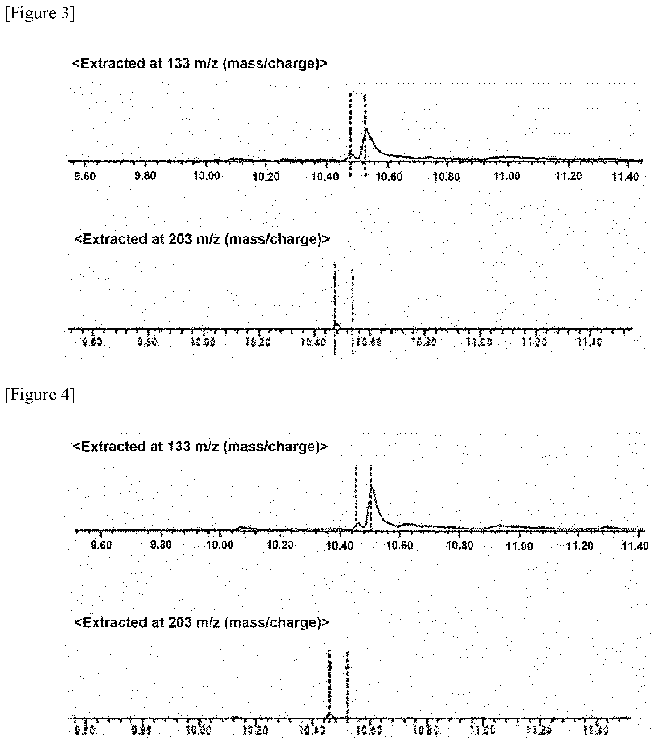

FIG. 3 is a graph showing results of Pyro-GCMS analysis of a cured product according to Example 2 of the present invention.

FIG. 4 is a graph showing results of Pyro-GCMS analysis of a cured product according to Example 3 of the present invention.

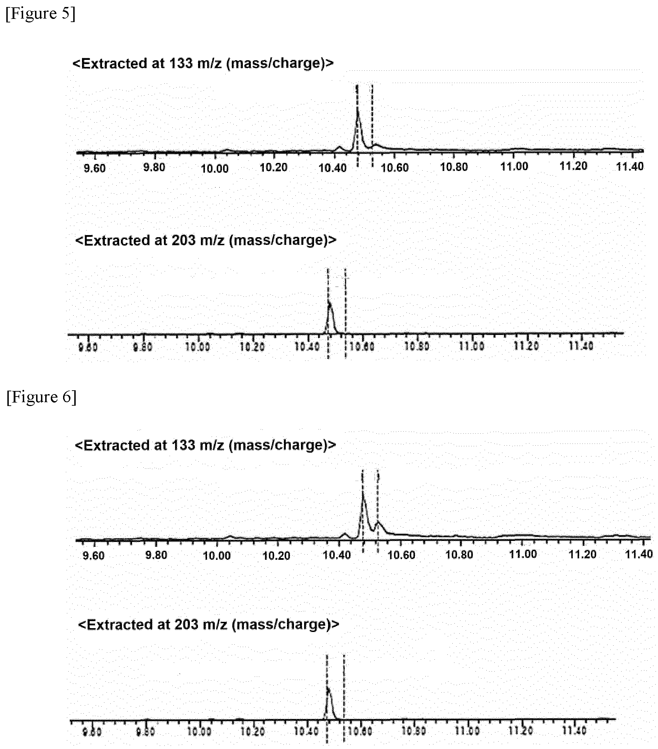

FIG. 5 is a graph showing results of Pyro-GCMS analysis of a cured product according to Example 4 of the present invention.

FIG. 6 is a graph showing results of Pyro-GCMS analysis of a cured product according to Example 5 of the present invention.

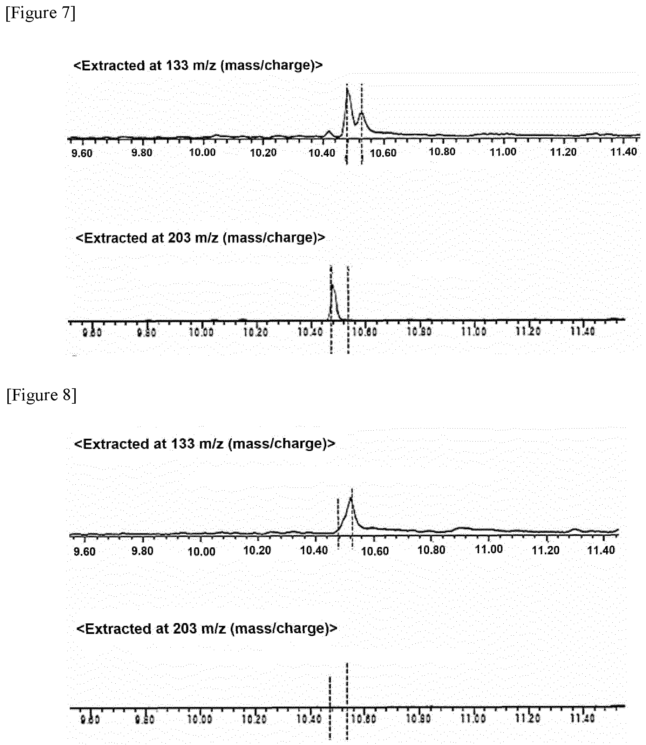

FIG. 7 is a graph showing results of Pyro-GCMS analysis of a cured product according to Example 6 of the present invention.

FIG. 8 is a graph showing results of Pyro-GCMS analysis of a cured product according to Comparative Example 1 of the present invention.

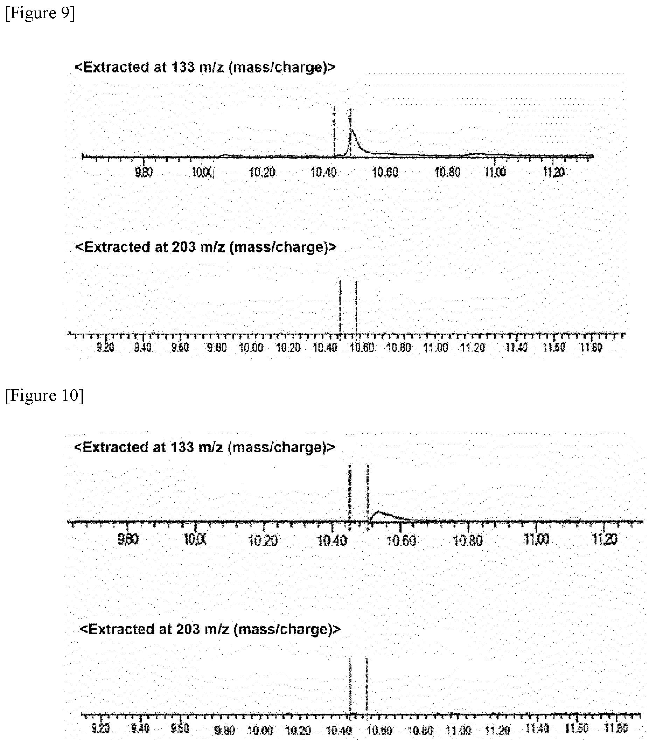

FIG. 9 is a graph showing results of Pyro-GCMS analysis of a cured product according to Comparative Example 2 of the present invention.

FIG. 10 is a graph showing results of Pyro-GCMS analysis of a cured product according to Comparative Example 3 of the present invention.

As shown in the results of FIGS. 2 to 10, in the graphs obtained by Pyro-GCMS analysis of the cured products according to Examples 1 to 6, it can be confirmed that the cured products have peaks at 9.00 minutes to 11.00 minutes when extracted at 133 m/z and 203 m/z, respectively. In addition, in the graphs obtained by Pyro-GCMS analysis of the cured products according to Comparative Examples 1 to 3, it can be confirmed that the cured products did not have peaks at 9.00 minutes to 11.00 when extracted at 203 m/z.

Therefore, according to an exemplary embodiment of the present invention, it can be confirmed that, when the cured product has peaks at 9.00 to 11.00 minutes when extracted at 133 m/z and 203 m/z, respectively, in a graph obtained by Pyro-GCMS analysis, the surface of the cured product exhibits excellent stain resistance.

## Claims

1. A cured product, wherein
the cured product
is a cured product of an acrylic-based resin composition, and
has peaks at 9.00 minutes to 11.00 minutes when extracted at 133 m/z (mass/charge) and 203 m/z (mass/charge), respectively, in a graph obtained by Pyro-GCMS (Pyro-Gas Chromatography/Mass Spectrometry) analysis of the cured product.

2. The cured product of claim 1, wherein the cured product has a surface gloss value of 10 or less under a 60° gloss condition.

3. The cured product of claim 1, wherein
a surface of the cured product has a wrinkled surface, and
the cured product has a surface roughness (Rz) of 3 µm to 10 µm.

4. The cured product of claim 1, wherein
the acrylic-based resin composition
comprises 1 to 60 parts by weight of an acrylic-based oligomer, 1 to 40 parts by weight of a silicone-based oligomer, and 30 to 100 parts by weight of a monomer, and
comprises 5 parts by weight or less of an initiator with respect to 100 parts by weight of the acrylic-based oligomer, the silicone-based oligomer, and the monomer.

5. The cured product of claim 4, wherein a weight average molecular weight (Mw) of the acrylic-based oligomer is 100 g/mol to 50,000 g/mol.

6. The cured product of claim 4, wherein a weight average molecular weight (Mw) of the silicone-based oligomer is 1,000 g/mol to 50,000 g/mol.

7. The cured product of claim 4, wherein the monomer comprises one or more selected from (meth)acrylate, 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 2-hydroxyethylene glycol (meth)acrylate, 2-hydroxypropylene glycol (meth)acrylate, acrylic acid, methacrylic acid, 2-(meth)acryloyloxyacetic acid, 3-(meth)acryloyloxypropyl acid, 4-(meth)acryloyloxybutyric acid, 1,6-hexanediol diacrylate, acrylic acid dimer, itaconic acid, maleic acid, caprolactone modified hydroxyacrylate (CHA), tetraethylene glycol diacrylate, tripropylene glycol diacrylate, dipropylene glycol diacrylate, triethylene glycol diacrylate, pentaerythritol triacrylate, and trimethylolpropane ethoxy triacrylate.

8. The cured product of claim 4, wherein the acrylic-based resin composition further comprises one or more fillers selected from silica, alumina, a glass bead, and an organic bead.

9. A decorative film comprising:
a base material layer; and
the cured product of any one of claims 1 to 8 provided on the base material layer.

10. A method for manufacturing a decorative film, the method comprising:
preparing a base material layer;
applying an acrylic-based resin composition on the base material layer;
first light irradiation of irradiating the applied composition with light (L1) having a predetermined wavelength under an inert gas condition to form wrinkles on a surface of the applied composition; and
second light irradiation of irradiating the applied composition with light (L2) having a longer wavelength than the light (L1) under an air condition to form a cured product layer of the composition,
wherein the cured product layer has peaks at 9.00 to 11.00 minutes when extracted at 133 m/z (mass/charge) and 203 m/z (mass/charge), respectively, in a graph obtained by Pyro-GCMS (Pyro-Gas Chromatography/Mass spectrometry) analysis of the cured product layer.

11. The method of claim 10, wherein
the acrylic-based resin composition
comprises 1 to 60 parts by weight of an acrylic-based oligomer, 1 to 40 parts by weight of a silicone-based oligomer, and 30 to 100 parts by weight of a monomer, and
comprises 5 parts by weight or less of an initiator with respect to 100 parts by weight of the acrylic-based oligomer, the silicone-based oligomer, and the monomer.

12. The method of claim 11, wherein a weight average molecular weight (Mw) of the acrylic-based oligomer is 100 g/mol to 50,000 g/mol.

13. The method of claim 11, wherein a weight average molecular weight (Mw) of the silicone-based oligomer is 1,000 g/mol to 50,000 g/mol.
